# EUROPEAN PATENT SPECIFICATION

(11) **EP 1 416 442 B1**
(45) Date of publication and mention of the grant of the patent: **14.02.2007**
(21) Application number: 03025022.9
(22) Date of filing: 30.10.2003
(51) Int. Cl.: G06F 19/00, G06T 7/00, G06T 7/60

(54) **Imaging apparatus for automatic diagnosis based on a positional relationship of positions of interest across a plurality of images of an object**
Bildverarbeitungsvorrichtung zur automatischen Diagnose aufgrund der Lagebeziehung interessierender Positionen über mehrere Bilder eines Objekts
Appareil de traitement d'images pour une diagnose automatique basée sur les relations spatiales entre des positions d'intérêt dans plusieurs d'images d'un objet

(30) Priority: 31.10.2002 JP 2002317609
(43) Date of publication of application: 06.05.2004
(73) Proprietor: FUJI PHOTO FILM CO., LTD., Minami-Ashigara-shi, Kanagawa-ken (JP)
(72) Inventor: Arakawa, Satoshi, Fuji Photo Film., Ltd., Ashigarakami-gun Kanagawa-ken (JP)
(74) Representative: Klunker . Schmitt-Nilson . Hirsch

(56) References cited:
- US-A- 2002 076 091
- US-B1- 6 242 743
- SMALL C F ET AL: "Validation of a 3D optoelectronic motion analysis system for the wrist joint" CLINICAL BIOMECHANICS, BUTTERWORTH SCIENTIFIC LTD, GUILDFORD, GB, vol. 11, no. 8, 1 December 1996 (1996-12-01), pages 481-483, XP004070869 ISSN: 0268-0033
- YEASIN M ET AL: "Development of an Automated Image Processing System for Kinematic Analysis of Human Gait" REAL-TIME IMAGING, ACADEMIC PRESS LIMITED, GB, vol. 6, no. 1, February 2000 (2000-02), pages 55-67, XP004419524 ISSN: 1077-2014

## Description

### BACKGROUND OF THE INVENTION

### Field of the Invention

The present invention relates to a diagnostic imaging apparatus according to the preamble of claim 1.

### Description of the Related Art

The following documents (1) and (2) disclose information related to the present invention.
(1) Japanese Unexamined Patent Publication No. 2002-109550
(2) U.S. Patent Laid-Open NO. 20020057828

Conventionally, various radiographic-image recording apparatuses have been proposed, where those radiographic-image recording apparatuses apply radiation to an object such as a human body, and record a radiographic image by exposing a film or the like to the radiation which has passed through the object.

In addition to the radiographic-image recording apparatuses which record an image on a film by directly exposing the film to the radiation, for example, the following types of radiographic-image recording apparatuses have been proposed. The first type of radiographic-image recording apparatuses use a solid-state radiation detector which records a radiographic image by storing electric charges generated by application of radiation, where the quantities of the stored electric charges correspond to exposure doses. The second type of radiographic-image recording apparatuses use an accumulative fluorescent sheet, which is constituted by a base and an accumulative fluorescent layer formed on the base. The accumulative fluorescent layer stores portions of radiation energy, and emits stimulated phosphorescent light according to the stored radiation energy when excitation light is applied to the accumulative fluorescent layer.

For example, the radiographic images recorded by the above radiographic-image recording apparatuses are developed in a radiographic film, or read as an image signal and displayed as a visible image on a monitor based on the image signal. Thus, physicians can perform image diagnosis by observing the radiographic film or the visible image on the monitor.

In addition, various methods for reading as an image signal a radiographic image recorded as above, calculating a predetermined characteristic quantity based on the image signal, and performing diagnosis based on the characteristic quantity have been proposed. For example, aforementioned document (1) proposes a technique in which contours of a cardiothoracic region (i.e., a region including a thorax and a heart) are automatically detected based on an image signal representing a radiographic image of a chest, the widths of the thorax and the heart are automatically measured based on the automatically detected contours, a cardiothoracic ratio is calculated based on the automatically measured widths, and a diagnosis is performed based on the cardiothoracic ratio.

Further, aforementioned document (2) proposes a technique in which measurement points in a spine image are automatically set based on an image signal representing a radiographic image of a spine, a characteristic quantity is automatically measured in accordance with a measurement method which is stored in advance, and image diagnosis is performed based on the automatically measured characteristic quantity.

However, the radiographic images which are produced by the conventional radiographic-image recording apparatuses and provided for image diagnosis are still images. Therefore, it is impossible to perform functional diagnosis in which abnormality in a predetermined part (e.g., a joint) of a human body which appears during movement of the predetermined part is diagnosed, although morphological diagnosis can be performed.

A diagnostic imaging apparatus according to the preamble of claim 1 is known from Small C. F. et al.: "Validation of a 3D optoelectronic motion analysis system for the wrist joint", Clinical Biomechanis, Butterworth Scientific Ltd., Guildform, GB, vol. 11, no. 8, 1. December 1996, pages 481-483 (XP004070869). Specifically in this prior art apparatus images of a predetermined part of an object are taken at two predetermined postures of the predetermined part. Starting from the characteristic quantity, the prior art makes use of a linear model in order to further evaluate the measurement results.

US-6,242,743 discloses a tomographic imaging system including solid-state radiation detectors.

US 2002/0076091 A1 discloses a computer-added diagnostic system. The system makes a diagnosis output regarding the likelihood of suspected abnormalities in form of image annotation information.

### SUMMARY OF THE INVENTION

The present invention has been developed in view of the above circumstances.

It is an object of the present invention to provide a diagnostic imaging apparatus which outputs information on a predetermined part of an object based on images of the predetermined part which are taken, and enables functional diagnosis as well as morphological diagnosis.

In order to accomplish the above object, the present invention provides a diagnostic imaging apparatus having the features of claim 1.

In the diagnostic imaging apparatus according to the present invention, the plurality of images of the predetermined part are taken while the predetermined part is being intentionally moved by the person as the object, or by another person.

In addition, one of the plurality of images may be taken at the time at which the movement of the predetermined part begins or ends.

For example, the positions of interest may correspond to a head of humerus, a capitulum of humerus, or a styloid process in the case where the predetermined part is a joint of an arm, or a head of femur or an apex of patella in the case where the predetermined part is a joint of a leg.

For example, in the case where a position of interest in a first one of the plurality of images is mapped onto a second one of the plurality of images, the characteristic quantity may be the distance between the position of interest in the first one of the plurality of images and the corresponding position of interest in the second one of the plurality of images, the direction from the position of interest in the first one of the plurality of images to the corresponding position of interest in the second one of the plurality of images, or a path of a movement from the position of interest in the first one of the plurality of images to the corresponding position of interest in the second one of the plurality of images.

The diagnostic imaging apparatus according to the present invention further comprises an automatic diagnosis unit which outputs information on the predetermined part of the object, based on the characteristic quantity.

The information on the predetermined part may be information which is derived from the characteristic quantity and is directly related to diagnosis, e.g., information indicating whether or not the predetermined part is normal or information indicating a degree of abnormality of the predetermined part. Alternatively, it is possible to output the characteristic quantity per se as the information on the predetermined part.

When information indicating whether or not the predetermined part is normal is outputted, it is possible to easily perform functional diagnosis, as well as morphological diagnosis, based on the information.

The predetermined part may be a joint of a human body. In this case, it is possible to easily perform functional diagnosis of the joint.

The plurality of images may be a plurality of radiographic images which are taken by applying radiation to the predetermined part during the movement of the predetermined part.

In the above case, a marker may be attached to the predetermined part, and the position-of-interest determination unit may determine positions of images of the marker which are formed in the plurality of radiographic images by radiations which have passed through the marker, to be the positions of interest, to be the positions of interest. In this case, it is possible to easily determine the positions of interest even when the diagnostic imaging apparatus has a simple construction.

The above marker may be realized by anything which has a different transmittance from the object and can be discriminated from images around the images of the marker.

The plurality of radiographic images may be taken by using a solid-state radiation detector which generates and stores electric charges when the solid-state radiation detector is irradiated with radiation. In this case, it is possible to easily take the plurality of images of the predetermined part of the object during the movement of the part.

### BRIEF DESCRIPTION OF THE DRAWINGS

FIG. 1 is a block diagram illustrating an outline of a construction of a diagnostic radiographic imaging apparatus according to an embodiment of the present invention.
FIG. 2A is a perspective view illustrating an outline of a construction of a solid-state radiation detector used in the diagnostic radiographic imaging apparatus of FIG. 1.
FIG. 2B is a cross-sectional view of a portion a of the solid-state radiation detector of FIG. 1.
FIG. 3 is a schematic view of a circuit formed in an electric-signal detection layer of the solid-state radiation detector illustrated in FIGS. 2A and 2B.
FIGS. 4A and 4B are diagrams provided for explaining operations of the diagnostic radiographic imaging apparatus of FIG. 1.
FIGS. 5A and 5B are diagrams provided for explaining positions of interest.

### DESCRIPTION OF THE PREFERRED EMBODIMENTS

An embodiment of the present invention is explained in detail below with reference to the attached drawings.

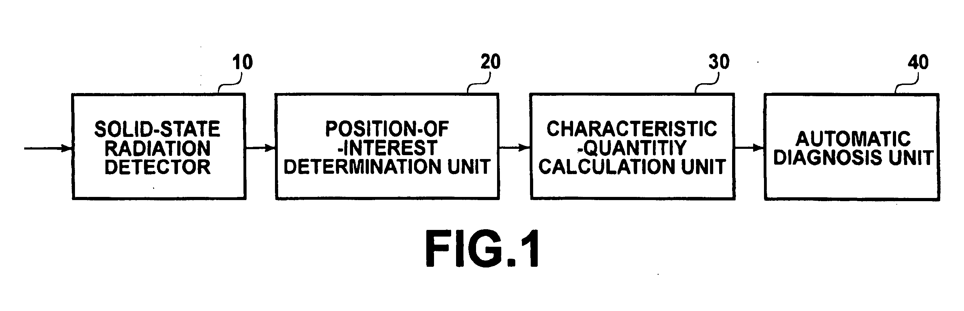

A diagnostic radiographic imaging apparatus according to an embodiment of the present invention is explained below. FIG. 1 is a block diagram illustrating an outline of a construction of the diagnostic radiographic imaging apparatus according to the embodiment.

As illustrated in FIG. 1, the diagnostic radiographic imaging apparatus of FIG. 1 comprises a solid-state radiation detector 10, a position-of-interest determination unit 20, a characteristic-quantity calculation unit 30, and an automatic diagnosis unit 40. The solid-state radiation detector 10 generates and stores electric charges when the solid-state radiation detector 10 is irradiated with a radiation. The position-of-interest determination unit 20 selects two radiographic images from among a plurality of radiographic images outputted from the solid-state radiation detector 10, and determines positions of interest in the two radiographic images. The characteristic-quantity calculation unit 30 calculates a characteristic quantity which indicates a positional relationship between the positions of interest in the two radiographic images which are determined by the position-of-interest determination unit 20. The characteristic-quantity calculation unit 30 outputs information indicating whether or not a predetermined part of a human body is normal, based on the characteristic quantity calculated by the characteristic-quantity calculation unit 30, where the human body is an object of the plurality of radiographic images.

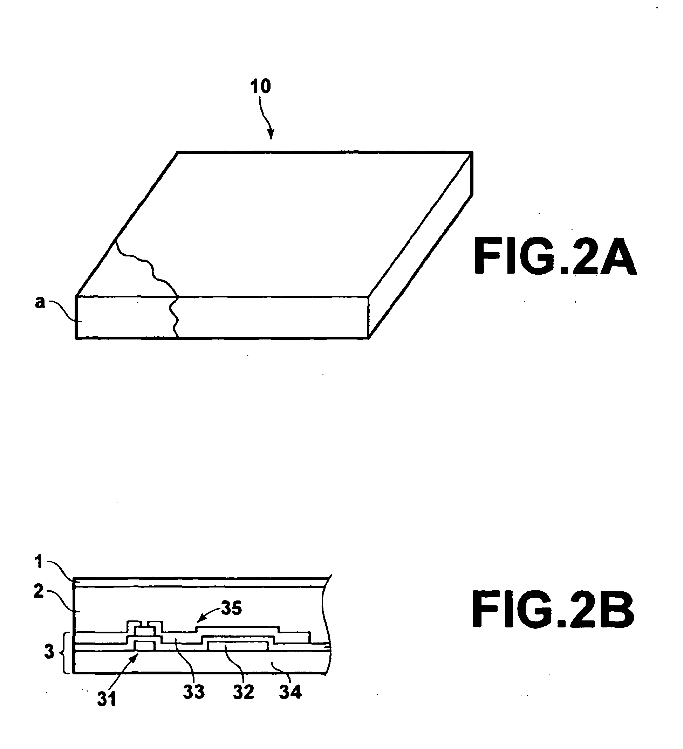

FIG. 2A is a perspective view illustrating an outline of a construction of the solid-state radiation detector 10 used in the diagnostic radiographic imaging apparatus of FIG. 1, and FIG. 2B is a cross-sectional view of a portion a of the solid-state radiation detector 10. As illustrated in FIG. 2, in the solid-state radiation detector 10, an electrode layer 1, a radiation detection layer 2, and an electric-signal detection layer 3 are formed in this order. The electrode layer 1 allows radiation for recording to pass through. The radiation detection layer 2 generates electric charges when the radiation detection layer 2 is irradiated with the radiation which has passed through the electrode layer 1. The electric-signal detection layer 3 detects as electric signals the electric charges generated in the radiation detection layer 2.

As illustrated in FIG. 2B, in the electric-signal detection layer 3, a great number of detection elements 35 are two-dimensionally arranged on a surface of a substrate 34. Each of the detection elements 35 is comprised of a TFT (thin-film transistor) switch 31, a pixel capacitance 32, and a pixel electrode 33.

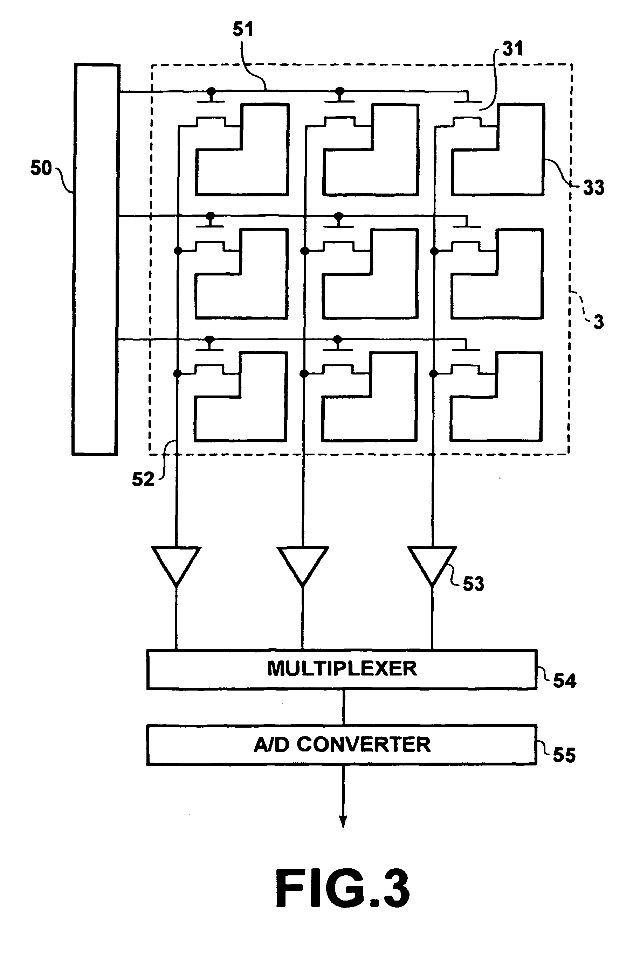

FIG. 3 is a schematic plan view of a circuit formed in the electric-signal detection layer 3. Each capacitor realized by the pixel electrode 33 and the pixel capacitance 32 stores an electric charge generated in the radiation detection layer 2 by irradiation with the radiation. The TFT switch 31 can be controlled on and off through a scanning line 51 (which is provided for each row) by a control signal generated by a scanning-line driver unit 50. Thus, an electric charge stored in the capacitor connected to the TFT switch 31 can be read out. Then, an electric signal corresponding to the electric charge can be read out through a signal line 52, an amplifier 53, a multiplexer 54, and an analog-to-digital converter 55.

The solid-state radiation detector 10 of this embodiment takes a radiographic image of a predetermined part (e.g., a joint in an arm or leg) of a human body at intervals of 0.5 micrometers during movement of the predetermined part. Then, the solid-state radiation detector 10 outputs to the position-of-interest determination unit 20 image signals representing a plurality of radiographic images of the predetermined part which are taken by the solid-state radiation detector 10 at intervals of 0.5 micrometers.

The position-of-interest determination unit 20 operates as follows.

First, the position-of-interest determination unit 20 selects two radiographic images from among the plurality of radiographic images which are inputted to the position-of-interest determination unit 20. For example, in the case where images of states of an arm during an upward movement of the arm are taken by the solid-state radiation detector 10, a first radiographic image P1 of a first state and a second radiographic image P2 of a second state are selected, where the arm is down in the first state, and the arm is moving upward in the second state. The first radiographic image P1 (the first one of the plurality of radiographic images) is a radiographic image of the first state, and the selection of the second radiographic image P2 can be realized by selecting a radiographic image which is inputted when a predetermined time elapses after the first radiographic image P1 is inputted. The predetermined time is preset in the position-of-interest determination unit 20.

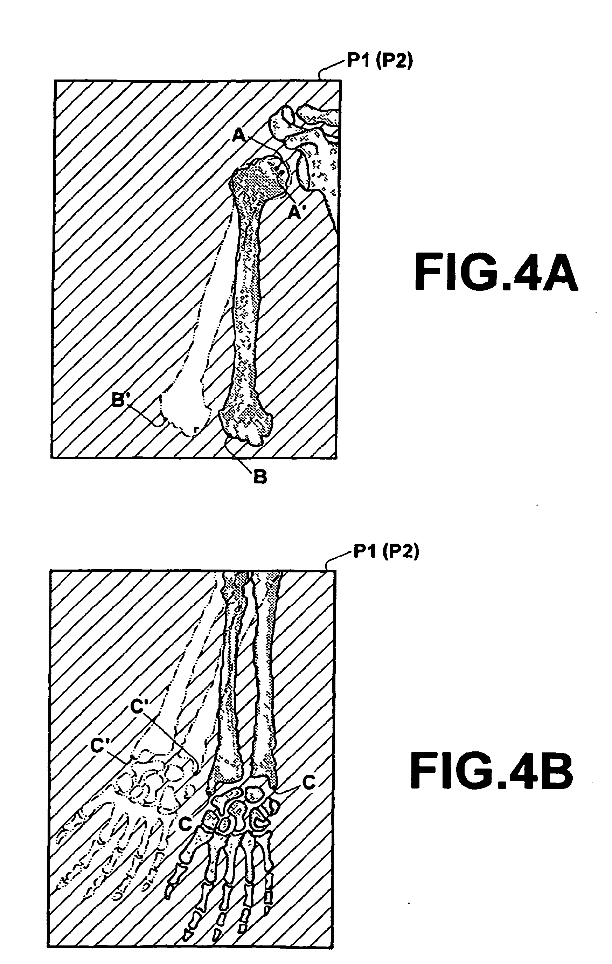

FIGS. 4A and 4B show corresponding portions in examples of the first and second radiographic images P1 and P2. In each of FIGS. 4A and 4B, the corresponding portions of the first and second radiographic images P1 and P2 are superimposed on each other, contours in the first radiographic image P1 are indicated by solid lines, and contours in the second radiographic image P2 are indicated by dashed double-dotted lines.

As described above, according to the present embodiment, the position-of-interest determination unit 20 selects two radiographic images from among the plurality of radiographic images inputted into the position-of-interest determination unit 20. Alternatively, it is possible to input only two radiographic images into the position-of-interest determination unit 20, where the two radiographic images are designated in advance from among the plurality of radiographic images which are taken. Further, it is also possible to detect a position of interest from every radiographic image which is taken.

Secondly, at least one position of interest in each of the first and second radiographic images P1 and P2 is determined. In the examples of FIGS. 4A and 4B, a predetermined point A in a head of humerus, a predetermined point B in a capitulum of humerus and a predetermined point C in a styloid process are determined as positions of interest in the first radiographic image P1.

The above positions of interest can be determined in any way. For example, it is possible to determine a contour image of bones, and determine each position of interest based on a positional relationship with the contour image. In this case, the positional relationship between the contour image and the position of interest may be preset. Alternatively, it is possible to place in advance a marker exhibiting a different transmittance from a human body with respect to radiations, on a predetermined position around a joint of the human body, take a radiographic image of a part containing the joint and the marker by irradiating the joint with radiation, and determine the position of the image of the marker produced by a portion of the radiation which has passed through the marker, to be the position of interest. The marker can be made of, for example, lead, which shades the radiation. When the marker is made of lead, the image of the marker can be detected by comparing the magnitude of an image signal representing the radiographic image with a predetermined threshold value, and detecting a position of a portion of the radiographic image in which the magnitude of the image signal is greater than the threshold value, as the position of the image of the marker (in the case where the magnitude of the image signal increases with decrease in the transmittance). The maker may have any shape which can be detected as a position of interest, for example, a round or rectangular shape.

In addition, as illustrated in FIGS. 4A and 4B, points A', B', and C' are determined to be positions of interest in the second radiographic image P2 in correspondence with the points of interest A, B, and C in the first radiographic image P1.

Thirdly, the position-of-interest determination unit 20 outputs to the characteristic-quantity calculation unit 30 the coordinates of positions of interest in the first and second radiographic images P1 and P2 which are determined as above. Then, the characteristic-quantity calculation unit 30 calculates, based on the above coordinates, the distances between the points A and A', B and B', and C and C' as the characteristic quantities corresponding to the positions of interest A, B, and C.

Next, the calculated characteristic quantities for the points A, B, and C are outputted to the automatic diagnosis unit 40, in which characteristic quantities for a normal human body and sick human bodies having predetermined diseases are stored in advance. The automatic diagnosis unit 40 compares the calculated characteristic quantities corresponding to the points A, B, and C with the characteristic quantities for the normal and sick human bodies. For example, when the calculated characteristic quantities are close to the characteristic quantities for the normal human body, the automatic diagnosis unit 40 outputs information indicating that the examined part of the object is normal. On the other hand, when the calculated characteristic quantities are close to characteristic quantities corresponding to a human body having one of the predetermined diseases, the automatic diagnosis unit 40 outputs information indicating the disease. The information indicating that the examined object is normal or the information indicating a disease may be displayed on a display means such as a monitor.

In the diagnostic radiographic imaging apparatus according to the present embodiment, a plurality of radiographic images of predetermined part (e.g., a joint) of a human body are taken during movement of the predetermined part, and positions in the plurality of radiographic images corresponding to a predetermined position around the predetermined part are determined to be positions of interest. Then, at least one characteristic quantity indicating a positional relationship between the corresponding positions in the plurality of radiographic images is calculated, and information indicating whether or not the predetermined part of the human body is normal is outputted based on the at least one characteristic quantity. Therefore, it is possible to easily perform functional diagnosis of the predetermined part, as well as morphological diagnosis, based on the above information.

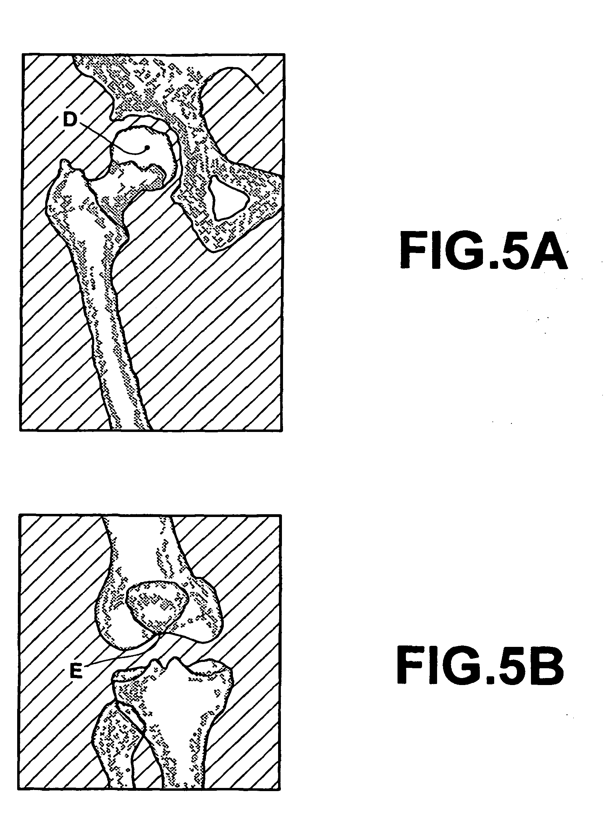

The diagnostic radiographic imaging apparatus according to the present embodiment can be modified as follows.
(i) Although, in the above embodiment, a distance between positions of interest is calculated as a characteristic quantity, the characteristic quantity is not limited to the distance, and any quantity indicating a positional relationship between corresponding positions of interest can be obtained as a characteristic quantity. For example, it is possible to calculate a characteristic quantity by utilizing a direction of movement of a position of interest, a path of movement, or the like.
(ii) Although, in the above embodiment, information on an arm is outputted based on radiographic images of an upward movement of an arm, the present invention is not limited to application to such movement of such a part of a human body. For example, it is possible to output information on respective parts of a human body based on radiographic images of, for example, movement of a lower arm and a hand under a fixed upper arm or a bending-stretching movement of a leg. In the case of movement of a lower arm and a hand under a fixed upper arm, for example, it is possible to determine a predetermined position in a capitulum of humerus or a predetermined position in a styloid process to be a position of interest. On the other hand, in the case of a bending-stretching movement of a leg, it is possible to determine a predetermined position D in a head of a femur or a predetermined position E in an apex of a patella (as illustrated in FIG. 5A or 5B) to be a position of interest.
(iii) The automatic diagnosis unit 40 can also output information indicating a degree of abnormality of a predetermined part of a human body as well as the information indicating whether or not the predetermined part is normal. An example of the information indicating a degree of abnormality is information indicating by an evaluation point a degree of aggravation in subdeltoid bursitis. Alternatively, it is possible to output a numerical value indicating a characteristic quantity per se.
(iv) In the above embodiment, information on a part of which radiographic images are taken by using a solid-state radiation detector is outputted based on the radiographic images. However, the radiographic images need not be taken by using a solid-state radiation detector, and may be taken by any means which can take a plurality of radiographic images while a desired part of an object is moving.

## Claims

1. A diagnostic imaging apparatus comprising:
a position-of-interest determination unit (20) which determines a plurality of positions in a plurality of images (P1, P2) of a predetermined part of an object which are taken of the predetermined part, to be positions of interest (A. B, C) in the plurality of images (P1, P2), where the plurality of positions in the plurality of images correspond to a predetermined position in the predetermined part; and
a characteristic-quantity calculation unit (30) which calculates a characteristic quantity indicating a positional relationship between the positions of interest in the plurality of images, **characterized in that** the position-of-interest determination unit is adapted to determine the positions in the images which are taken during a movement of said part, and that an automatic diagnosis unit (40) is provided which outputs information on said predetermined part of said object, based on said characteristic quantity, such information including an indication whether or not the predetermined part is normal or an indication of the degree of abnormality of the predetermined part.

2. A diagnostic imaging apparatus according to claim 1, wherein said predetermined part is a joint of a human body.

3. A diagnostic imaging apparatus according to either one of claims 1 and 2, wherein said plurality of images are a plurality of radiographic images which are taken by applying a radiation to said predetermined part during the movement of the predetermined part.

4. A diagnostic imaging apparatus according to claim 3, wherein a marker is attached to said predetermined part, said plurality of images are a plurality of radiographic images, and said position-of-interest determination unit (20) determines positions of images of said marker to be said positions of interest, where said images of the marker are respectively formed in said plurality of radiographic images by radiations which have passed through the marker.

5. A diagnostic imaging apparatus according to either one of claims 3 and 4, wherein said plurality of radiographic images are taken by using a solid-state radiation detector which generates and stores electric charges when the solid-state radiation detector is irradiated with a radiation.

## Patentansprüche

1. Diagnose-Abbildungsvorrichtung, umfassend:
eine Interessenszonen-Bestimmungseinheit (20), die eine Mehrzahl von Zonen in einer Mehrzahl von Bildern (P1, P2) eines vorbestimmten Teils eines Objekts, die von dem vorbestimmten Teil aufgenommen wurden, als Interessenszonen (A, B, C) in den mehreren Bildern (P1, P2) bestimmt, wobei die mehreren Zonen innerhalb der mehreren Bilder einer vorbestimmten Position in dem vorbestimmten Teil entsprechen; und
eine Kenngrößen-Berechnungseinheit (30), die eine Kenngröße, welche eine Lagebeziehung zwischen den Interessenszonen in den mehreren Bildern angibt, berechnet, **dadurch gekennzeichnet, daß** die Interessenszonen-Bestimmungseinheit dazu ausgebildet ist, die Zonen innerhalb der Bilder zu bestimmen, die während einer Bewegung des Teils aufgenommen wurden, und daß eine automatische Diagnoseeinheit (40) vorgesehen ist, die Information über den vorbestimmten Teil des Objekts basierend auf der Kenngröße ausgibt, wobei diese Information eine Angabe darüber enthält, ob der vorbestimmte Teil normal ist, oder eine Anzeige über den Grad der Abnormalität des vorbestimmten Teils enthält.

2. Vorrichtung nach Anspruch 1, bei der der vorbestimmte Teil ein Gelenk eines menschlichen Körpers ist.

3. Vorrichtung nach Anspruch 1 oder 2, bei der die mehreren Bilder mehrere radiographische Bilder sind, die durch Aufbringen einer Strahlung auf den vorbestimmten Teil während dessen Bewegung aufgenommen werden.

4. Vorrichtung nach Anspruch 3, bei der ein Marker an dem vorbestimmten Teil angebracht ist, die mehreren Bilder mehrere radiographische Bilder sind, und die Interessenszonen-Bestimmungseinheit (20) Positionen der Bilder des Markers als die Interessenszonen bestimmt, wobei die Bilder des Markers in den mehreren radiographischen Bildern durch Strahlungen gebildet sind, die durch den Marker hindurchgegangen sind.

5. Vorrichtung nach einem der Ansprüche 3 und 4, bei der die mehreren radiographischen Bilder unter Verwendung eines Festkörper-Strahlungsdetektors aufgenommen werden, der elektrische Ladungen erzeugt und speichert, wenn der Festkörper-Strahlungsdetektor mit Strahlung bestrahlt wird.

## Revendications

1. Appareil de formation d'image de diagnostic comprenant :
une unité de détermination de position d'intérêt (20) qui détermine une pluralité de positions dans une pluralité d'images (P1, P2) d'une partie prédéterminée d'un objet qui sont prises de la partie prédéterminée, comme étant des positions d'intérêt (A, B, C) dans la pluralité d'images (P1, P2), où la pluralité de positions dans la pluralité d'images correspond à une position prédéterminée dans la partie prédéterminée ; et
une unité de calcul de quantité caractéristique (30) qui calcule une quantité caractéristique indiquant une relation de positon entre les positions d'intérêt dans la pluralité d'images, **caractérisée en ce que** l'unité de détermination de position d'intérêt est adaptée à déterminer les positions dans les images qui sont prises pendant un mouvement de ladite partie et **en ce qu'**une unité de diagnostic automatique (40) est prévue qui émet en sortie des informations sur ladite partie prédéterminée dudit objet, sur la base de ladite quantité caractéristique, de telles informations comprenant une indication si la partie prédéterminée est normale ou non ou une indication du degré d'anormalité de la partie prédéterminée.

2. Appareil de formation d'image de diagnostic selon la revendication 1 dans lequel ladite partie prédéterminée est une articulation d'un corps humain.

3. Appareil de formation d'image de diagnostic selon l'une quelconque des revendications 1 et 2, dans lequel ladite pluralité d'images est une pluralité d'images radiographiques qui sont prises en appliquant un rayonnement à ladite partie prédéterminée pendant le mouvement de la partie prédéterminée.

4. Appareil de formation d'image de diagnostic selon la revendication 3, dans lequel un marqueur est fixé sur ladite partie prédéterminée, ladite pluralité d'images est une pluralité d'images radiographiques et ladite unité de détermination de position d'intérêt (20) détermine des positions des images dudit marqueur comme étant lesdites positions d'intérêt, où lesdites images du marqueur sont respectivement formées dans ladite pluralité d'images radiographiques par rayonnement qui sont passées à travers le marqueur.

5. Appareil de formation d'image de diagnostic selon l'une quelconque des revendications 3 et 4, dans lequel ladite pluralité d'images radiographiques est prise en utilisant un détecteur de rayonnement à l'état solide qui génère et stocke des charges électriques lorsque le détecteur de rayonnement à l'état solide est irradié avec un rayonnement.
